# EUROPEAN PATENT APPLICATION

(11) **EP 1 898 399 A2**
(43) Date of publication of application: **12.03.2008**
(21) Application number: 07017602.9
(22) Date of filing: 07.09.2007
(51) Int. Cl.: G11B 5/86

(54) **Master recording medium, magnetic transfer method , magnetic transfer apparatus, and magnetic recording medium and magnetic recording and reproducing apparatus thereby made**

(30) Priority: 07.09.2006 JP 2006243235
(71) Applicant: FUJIFILM Corporation, Minato-ku Tokyo 106-8620 (JP); FUJITSU LIMITED, Kawasaki-shi, Kanagawa 211-8588 (JP)
(72) Inventor: Fujiwara, Naoto, Odawara-shi Kanagawa (JP); Sugiyama, Kenji, Odawara-shi Kanagawa (JP); Niitsuma, Kazuhiro, Odawara-shi Kanagawa (JP); Yasunaga, Tadashi, Odawara-shi Kanagawa (JP); Maruyama, Tsugito, Kawasaki-shi Kanagawa 211-8588 (JP); Kuroda, Sumio, Kawasaki-shi Kanagawa 211-8588 (JP); Nakamura, Yutaka, Kawasaki-shi Kanagawa 211-8588 (JP); Suzuki, Hiroyuki, Kawasaki-shi Kanagawa 211-8588 (JP)
(74) Representative: Grünecker, Kinkeldey, Stockmair & Schwanhäusser Anwaltssozietät

(57) **Abstract**

The present invention provides a master recording medium (66), a magnetic transfer method, a magnetic transfer apparatus, and a magnetic recording medium (60) and a magnetic recording and reproducing apparatus thereby made, which are capable of obtaining a good regenerative signal with few even harmonic components such as the second-order harmonic components on reproducing the information transferred to the magnetic recording medium in the case of recording the information on the magnetic recording medium having a magnetic layer composed of the perpendicular magnetization film by the magnetic transfer.

## Description

### BACKGROUND OF THE INVENTION

### Field of the Invention

The present invention relates to a master recording medium, a magnetic transfer method, a magnetic transfer apparatus, and a magnetic recording medium and a magnetic recording and reproducing apparatus thereby made, and in particular, to the master recording medium capable of obtaining a good regenerative signal on a perpendicular magnetic recording medium, the magnetic transfer method and magnetic transfer apparatus using the master recording medium, and the magnetic recording medium and magnetic transfer method thereby made.

### Description of the Related Art

In recent years, as to a magnetic recording and reproducing apparatus, there is a tendency that recording density becomes increasingly higher for the sake of realizing a small size and a large capacity. In particular, technical advance is rapid in the field of a hard disk drive which is a representative magnetic storage device.

In conjunction with such increase in information volume, a high-density magnetic recording medium is desired, which has a large capacity capable of recording a lot of information, and is low-cost and preferably capable of so-called fast access for reading out a necessary part in a short time. Such a high-density magnetic recording medium has an information recording area composed of narrow tracks. To have a magnetic head correctly scan in narrow track width and reproduce a signal at a high S/N ratio, a so-called tracking servo technique plays an important role. Conventionally, a sector servo method has been widely adopted in order to perform this tracking servo.

The sector servo method is a method wherein servo information such as a servo signal for track positioning, an address information signal of the track and a regenerative clock signal is recorded in servo fields correctly arranged at a fixed angle or the like on a data plane of a magnetic recording medium such as a magnetic disk so that the magnetic head scans the servo fields, reads out the servo information, and makes a correction while checking its own position.

The servo information needs to be recorded as a preformat on the magnetic recording medium when manufacturing the magnetic recording medium. At present, preformatting is performed by using a servo track writer. The servo track writer currently used includes the magnetic head having head width of about 75% of a track pitch for instance, where the servo signal is recorded while rotating the magnetic disk with the magnetic head close to the magnetic disk and moving the magnetic head from an outer circumference to an inner circumference at every 1/2 track. For that reason, preformat recording of one magnetic disk takes a long time, which is problematic in terms of production efficiency and is also a factor of cost increase.

For this reason, Japanese Patent Application Laid-Open No. 2001-297435 and Japanese Patent Application Laid-Open No. 2003-272142 disclose methods of magnetically transferring the information of a master recording medium having a pattern corresponding to the servo information formed therein to the magnetic recording medium as methods of accurately and efficiently performing the preformatting.

The magnetic transfer uses the master recording medium having a transfer pattern composed of a concavo-convex pattern according to the information to be transferred to the magnetic recording medium (slave medium) such as a magnetic disk for transfer. A magnetic field for recording is applied to the master recording medium in intimate contact with the magnetic recording medium so as to magnetically transfer a magnetic pattern corresponding to the information (such as servo information) recorded by the concavo-convex pattern of the master recording medium to the magnetic recording medium. This method has advantages that the recording can be statically performed without changing relative positions of the master recording medium and the magnetic recording medium, accurate preformat information recording is possible, and time required for the recording is very short. As for the method of the magnetic transfer, there are two kinds which are the magnetic transfer of perpendicular magnetic recording for recording magnetization information to be transferred on the magnetic recording medium by perpendicular magnetization and the magnetic transfer of in-plane magnetic recording for recording by in-plane magnetization in parallel with the magnetic recording medium.

### SUMMARY OF THE INVENTION

As for the magnetic transfer, it is important whether or not an amplitude and a period are as desired as to a regenerative signal waveform obtained from the magnetic recording medium having a magnetization pattern formed thereon by the magnetic transfer.

As a result of a research, the inventors hereof have clarified that, in the case where a magnetic film of the magnetic recording medium is composed of a perpendicular magnetization film, the regenerative signal waveform from the magnetic recording medium obtained by the magnetic transfer is dependent on a shape of a concavo-convex area of the master recording medium, intensity of a transfer magnetic field on performing the magnetic transfer and the like. To be more specific, concerning the regenerative signal waveform, the shape of the magnetic pattern to be magnetically transferred and the like change depending on the shape of the concavo-convex area of the master recording medium and the intensity of a transfer magnetic field on performing the magnetic transfer. And the shape of the regenerative signal waveform and the like are different according to the shape of the magnetic pattern and the like. Therefore, the clarification has been thus performed as to the relation between the shape of the concavo-convex area of the master recording medium and the intensity of the transfer magnetic field for the sake of obtaining a high-quality regenerative signal with lessened noise and harmonic components in perpendicular magnetic transfer.

In the case where the regenerative signal waveform includes a lot of noise and harmonic components such as second-order harmonic components, its quality as the regenerative signal is low, which significantly influences accuracy of recording and reproduction and the like of the information recorded in the magnetic recording medium. Especially, in the case where the information to be transferred to the magnetic recording medium is the servo signal, tracking performance lowers and reliability on recording and reproduction on the magnetic recording medium significantly lowers.

The present invention has been made in view of the circumstances, and provides a master recording medium, a magnetic transfer method, a magnetic transfer apparatus, and a magnetic recording medium and a magnetic recording and reproducing apparatus thereby made, which are capable of obtaining a good regenerative signal with few even harmonic components such as the second-order harmonic components on reproducing the information transferred to the magnetic recording medium in the case of recording the information on the magnetic recording medium having a magnetic layer composed of the perpendicular magnetization film by the magnetic transfer.

The invention according to a first aspect is a master recording medium having a concavo-convex pattern formed on its surface for transferring information to a disk-like magnetic recording medium and a magnetic layer formed at least on the surface of a convex area of the concavo-convex pattern, the master recording medium used to transfer the information recorded in the concavo-convex pattern to the magnetic recording medium by bringing the area having the concavo-convex pattern formed therein in intimate contact with the magnetic recording medium and applying a magnetic field of 75 to 105 (%) intensity of a coercive force of a magnetic layer constituting the magnetic recording medium vertically to the magnetic recording medium, characterized in that width of a concave area is 1.3 to 1.9 times the width of the convex area in a track direction of the concavo-convex pattern.

The invention according to a second aspect is a master recording medium having a concavo-convex pattern formed on its surface for transferring information to a disk-like magnetic recording medium and a magnetic layer formed at least on the surface of a convex area of the concavo-convex pattern, the master recording medium used to transfer the information recorded in the concavo-convex pattern to the magnetic recording medium by bringing the area having the concavo-convex pattern formed therein in intimate contact with the magnetic recording medium and applying a magnetic field of 85 to 115 (%) intensity of a coercive force of a magnetic layer constituting the magnetic recording medium vertically to the magnetic recording medium, characterized in that width of a concave area is 1.5 to 2.1 times the width of the convex area in a track direction of the concavo-convex pattern.

The invention according to a third aspect is a master recording medium having a concavo-convex pattern formed on its surface for transferring information to a disk-like magnetic recording medium and a magnetic layer formed at least on the surface of a convex area of the concavo-convex pattern, the master recording medium used to transfer the information recorded in the concavo-convex pattern to the magnetic recording medium by bringing the area having the concavo-convex pattern formed therein in intimate contact with the magnetic recording medium and applying a magnetic field of 95 to 125 (%) intensity of a coercive force of a magnetic layer constituting the magnetic recording medium vertically to the magnetic recording medium, characterized in that width of a concave area is 1.7 to 2.3 times the width of the convex area in a track direction of the concavo-convex pattern.

The invention according to a fourth aspect is the master recording medium according to the first to third aspects, wherein the information recorded in the concavo-convex pattern is servo information.

The invention according to a fifth aspect is a magnetic transfer method including: an intimate contact step of bringing a master recording medium in intimate contact with a disk-like magnetic recording medium, the master recording medium having a concavo-convex pattern formed on its surface for transferring information to the magnetic recording medium and a magnetic layer formed at least on the surface of a convex area of the concavo-convex pattern; and a magnetic transfer step of vertically applying a magnetic field to the master recording medium and the magnetic recording medium brought in intimate contact by the intimate contact step and thereby transferring the information of the master recording medium to the magnetic recording medium, characterized in that width of a concave area is 1.3 to 1.9 times the width of the convex area in a track direction of the concavo-convex pattern of the master recording medium; and intensity of the magnetic field applied in the magnetic transfer step is 75 to 105 (%) of a coercive force of a material constituting a magnetic layer of the magnetic recording medium.

The invention according to a sixth aspect is a magnetic transfer method including: an intimate contact step of bringing a master recording medium in intimate contact with a disk-like magnetic recording medium, the master recording medium having a concavo-convex pattern formed on its surface for transferring information to the magnetic recording medium and a magnetic layer formed at least on the surface of a convex area of the concavo-convex pattern; and a magnetic transfer step of vertically applying a magnetic field to the master recording medium and the magnetic recording medium brought in intimate contact by the intimate contact step and thereby transferring the information of the master recording medium to the magnetic recording medium, characterized in that width of a concave area is 1.5 to 2.1 times the width of the convex area in a track direction of the concavo-convex pattern of the master recording medium; and intensity of the magnetic field applied in the magnetic transfer step is 85 to 115 (%) of a coercive force of a material constituting a magnetic layer of the magnetic recording medium.

The invention according to a seventh aspect is a magnetic transfer method including: an intimate contact step of bringing a master recording medium in intimate contact with a disk-like magnetic recording medium, the master recording medium having a concavo-convex pattern formed on its surface for transferring information to the magnetic recording medium and a magnetic layer formed at least on the surface of a convex area of the concavo-convex pattern; and a magnetic transfer step of vertically applying a magnetic field to the master recording medium and the magnetic recording medium brought in intimate contact by the intimate contact step and thereby transferring the information of the master recording medium to the magnetic recording medium, characterized in that width of a concave area is 1.7 to 2.3 times the width of the convex area in a track direction of the concavo-convex pattern of the master recording medium; and intensity of the magnetic field applied in the magnetic transfer step is 95 to 125 (%)of a coercive force of a material constituting a magnetic layer of the magnetic recording medium.

The invention according to an eighth aspect is the magnetic transfer method according to fifth to seventh aspects, wherein the information transferred from the master recording medium to the magnetic recording medium is servo information.

The invention according to a ninth aspect is a magnetic transfer apparatus for transferring information of a master recording medium to a disk-like magnetic recording medium, including: the master recording medium having a concavo-convex pattern formed on its surface for transferring information to the magnetic recording medium and a magnetic layer formed at least on the surface of a convex area of the concavo-convex pattern; a magnetic field application device for bringing the master recording medium in intimate contact with the magnetic recording medium, and vertically applying a magnetic field to the master recording medium and the magnetic recording medium brought in intimate contact, characterized in that width of a concave area is 1.3 to 1.9 times the width of the convex area in a track direction of the concavo-convex pattern of the master recording medium; and intensity of the magnetic field applied by the magnetic field application device is 75 to 105 (%) of a coercive force of a material constituting a magnetic layer of the magnetic recording medium.

The invention according to a tenth aspect is a magnetic transfer apparatus for transferring information of a master recording medium to a disk-like magnetic recording medium, including: the master recording medium having a concavo-convex pattern formed on its surface for transferring information to the magnetic recording medium and a magnetic layer formed at least on the surface of a convex area of the concavo-convex pattern; a magnetic field application device for bringing the master recording medium in intimate contact with the magnetic recording medium, and vertically applying a magnetic field to the master recording medium and the magnetic recording medium brought in intimate contact, characterized in that width of a concave area is 1.5 to 2.1 times the width of the convex area in a track direction of the concavo-convex pattern of the master recording medium; and intensity of the magnetic field applied by the magnetic field application device is 85 to 115 (%) of a coercive force of a material constituting a magnetic layer of the magnetic recording medium.

The invention according to an eleventh aspect is a magnetic transfer apparatus for transferring information of a master recording medium to a disk-like magnetic recording medium, including: the master recording medium having a concavo-convex pattern formed on its surface for transferring information to the magnetic recording medium and a magnetic layer formed at least on the surface of a convex area of the concavo-convex pattern; a magnetic field application device for bringing the master recording medium in intimate contact with the magnetic recording medium, and vertically applying a magnetic field to the master recording medium and the magnetic recording medium brought in intimate contact, characterized in that width of a concave area is 1.7 to 2.3 times the width of the convex area in a track direction of the concavo-convex pattern of the master recording medium; and intensity of the magnetic field applied by the magnetic field application device is 95 to 125 (%) of a coercive force of a material constituting a magnetic layer of the magnetic recording medium.

The invention according to a twelfth aspect is the magnetic transfer apparatus according to the ninth to eleventh aspects, wherein the information transferred from the master recording medium to the magnetic recording medium is servo information.

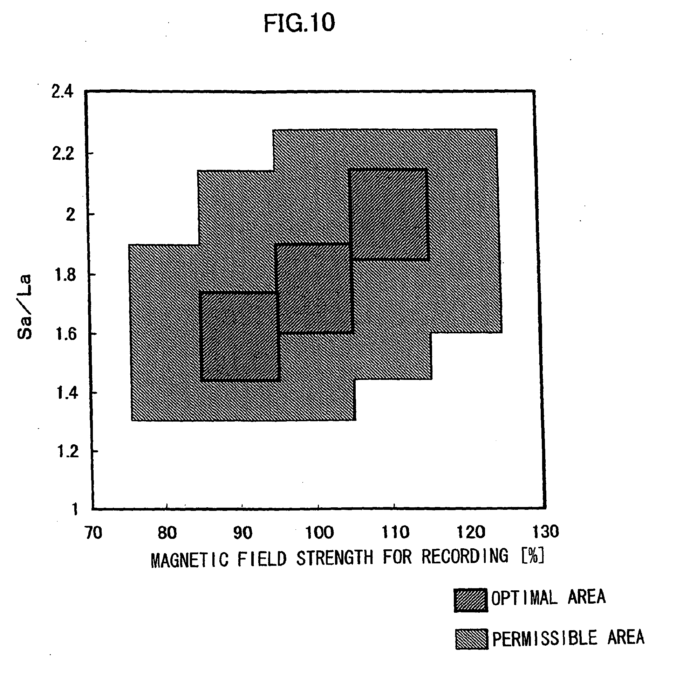

According to the above inventions, when magnetically transferring the servo information as shown in Fig. 10, the magnetically transferred magnetic recording medium can be well tracked by applying the magnetic field of 75 to 105 (%) intensity of the coercive force of the material constituting the magnetic layer of the magnetic recording medium and performing the magnetic transfer in the case where the width of the concave area is 1.3 to 1.9 times the width of the convex area in the track direction, applying the magnetic field of 85 to 115 (%) intensity of the coercive force of the material constituting the magnetic layer of the magnetic recording medium and performing the magnetic transfer in the case where the width of the concave area is 1.5 to 2.1 times the width of the convex area in the track direction, applying the magnetic field of 95 to 125 (%) intensity of the coercive force of the material constituting the magnetic layer of the magnetic recording medium and performing the magnetic transfer in the case where the width of the concave area is 1.7 to 2.3 times the width of the convex area in the track direction (permissible areas). This is because second-order harmonic intensity described later in the case of reproducing the magnetically transferred magnetic recording medium is 1 to less than 1.6 when the magnetic transfer is performed on the above conditions, and good tracking accuracy can be obtained within the range of these values.

Especially, in the case of magnetically transferring the servo information, the magnetically transferred magnetic recording medium can be especially well tracked by applying the magnetic field of 85 to 95 (%) intensity of the coercive force of the material constituting the magnetic layer of the magnetic recording medium and performing the magnetic transfer in the case where the width of the concave area is 1.45 to 1.75 times the width of the convex area in the track direction, applying the magnetic field of 95 to 105 (%) intensity of the coercive force of the material constituting the magnetic layer of the magnetic recording medium and performing the magnetic transfer in the case where the width of the concave area is 1.6 to 1.9 times the width of the convex area in the track direction, and applying the magnetic field of 105 to 115 (%) intensity of the coercive force of the material constituting the magnetic layer of the magnetic recording medium and performing the magnetic transfer in the case where the width of the concave area is 1.85 to 2.15 times the width of the convex area in the track direction (optimal areas). This is because second-order harmonic intensity described later in the case of reproducing the magnetically transferred magnetic recording medium is 1 to less than 1.3 when the magnetic transfer is performed on the above conditions, and especially good tracking accuracy can be obtained within the range of these values.

The invention according to a thirteenth aspect is a magnetic recording medium wherein information has been magnetically transferred thereto by the magnetic transfer method according to any one of the fifth to eighth aspects.

The invention according to a fourteenth aspect is a magnetic recording and reproducing apparatus wherein the magnetic recording medium according to the thirteenth aspect is provided.

As described above, according to the present invention, it is possible to obtain a regenerative signal with few even harmonic components such as the second-order harmonic components, improve the accuracy of recording and reproduction and the like and further improve tracking performance as to the magnetic recording medium.

### BRIEF DESCRIPTION OF THE DRAWINGS

Figs. 1A to 1C are schematic views of a process of a magnetic transfer method according to an embodiment of the present invention;
Figs. 2A to 2C are sectional views of a magnetic disk for transfer in each process of the magnetic transfer method according to the embodiment of the present invention;
Figs. 3A to 3D are process drawings of a formation method of a master disk according to the embodiment of the present invention;
Figs. 4A to 4D are process drawings of another formation method of the master disk according to the embodiment of the present invention;
Figs. 5A to 5D are process drawings of the formation method of the master disk according to the embodiment of the present invention;
Fig. 6 is a plan view of the master disk according to the present invention;
Fig. 7 is a schematic view of a magnetic transfer apparatus according to the present invention;
Figs. 8A and 8B are regenerative waveform drawings of the magnetic recording medium which has been magnetically transferred;
Figs. 9A and 9B are enlarged views of reproduced waveforms of the magnetic recording medium which has been magnetically transferred; and
Fig. 10 is a diagram showing a relation between a concavo-convex shape of the master disk and a transfer magnetic field strength.

### DETAILED DESCRIPTION OF THE PREFERRED EMBODIMENTS

Hereunder, a magnetic transfer method according to a first embodiment of the present invention will be described.

### [Magnetic Disk for Transfer]

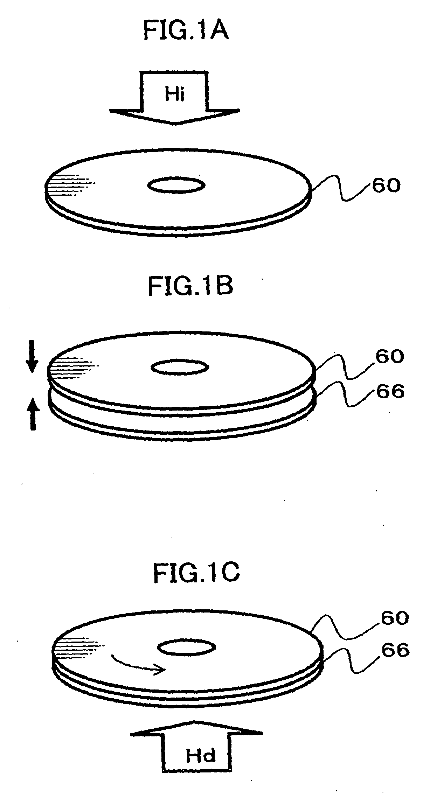

As shown in Fig. 1A, initial magnetization is performed to a magnetic disk for transfer 60 which is a magnetic recording medium. First, the magnetic disk for transfer 60 used for this will be described.

The magnetic disk for transfer 60 has a magnetic layer composed of a perpendicular magnetization film formed on one side or both sides of a disk-like substrate. To be more precise, a high-density hard disk and the like can be named.

The disk-like substrate is composed of materials such as glass and Al (aluminum), where a nonmagnetic layer is formed and then the magnetic layer is formed on this substrate.

The nonmagnetic layer is provided for a reason such as extending magnetic anisotropy in a vertical direction of the magnetic layer to be formed later. The materials used for the nonmagnetic layer should preferably be Ti (titanium), Cr (chrome), CrTi, CoCr, CrTa, CrMo, NiAl, Ru (ruthenium), Pd (palladium) and the like. The nonmagnetic layer is formed by forming a film of the materials by a sputtering method. Thickness of the nonmagnetic layer should preferably be 10 nm to 150 nm or more preferably 20 nm to 80 nm.

The magnetic layer is composed of the perpendicular magnetization film, and information is recorded in the magnetic layer. The materials used for the magnetic layer should preferably be Co (cobalt), Co alloys (CoPtCr, CoCr, CoPtCrTa, CoPtCrNbTa, CoCrB, CoNi and the like), Fe, Fe alloys (FeCo, FePt, FeCoNi and the like) and the like. These materials have high magnetic flux density, and also have perpendicular magnetic anisotropy by adjusting film-forming conditions and composition. The magnetic layer is formed by forming a film of the materials by a sputtering method. Thickness of the magnetic layer should preferably be 10 nm to 500 nm or more preferably 20 nm to 200 nm.

There are the cases where a soft magnetic layer is provided between the substrate and the nonmagnetic layer as required. This is performed in order to stabilize a perpendicular magnetization state of the magnetic layer and improve sensitivity on recording and reproduction. Thickness of the soft magnetic layer should preferably be 50 nm to 2000 nm or more preferably 80 nm to 400 nm.

According to this embodiment, a disk-like glass substrate of a 65-mm outer dimension is used as the substrate of the magnetic disk for transfer 60. The glass substrate is installed inside a chamber of a sputtering apparatus, and the pressure is reduced to 1.33 × 10 ⁻⁵ Pa (1.0 × 10⁻⁷ Torr). After that, an Ar (argon) gas is introduced into the chamber, and a discharge is performed by using a CrTi target under a condition of substrate temperature of 200°C so as to perform sputtering film formation. Thus, the nonmagnetic layer composed of CrTi is film-formed by 60 nm.

After that, the Ar gas is introduced as above, and the discharge is performed by using a CoCrPt target in the same chamber under the condition of substrate temperature of 200°C likewise so as to perform the sputtering film formation. Thus, the magnetic layer composed of CoCrPt is film-formed by 25 nm.

The above process was used to manufacture the magnetic disk for transfer 60 having the nonmagnetic layer and the magnetic layer film-formed on the glass substrate.

### [Initial Magnetization of the Disk for Transfer]

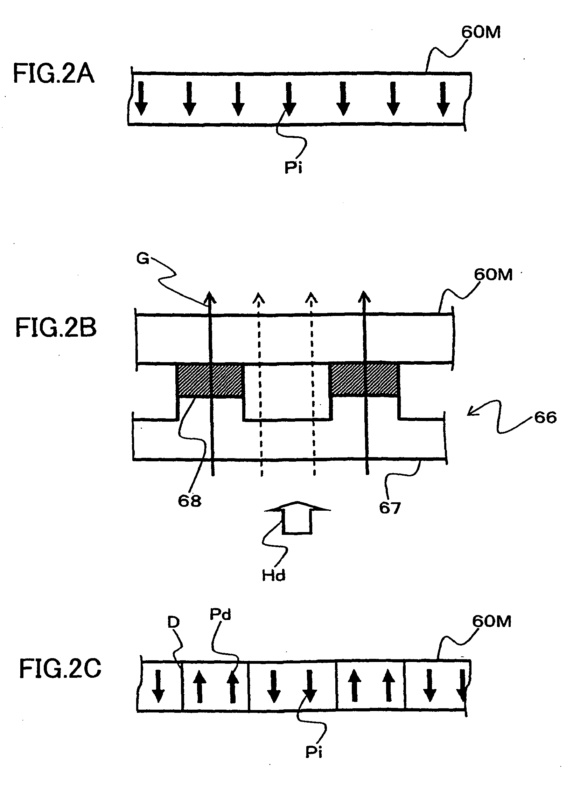

Next, the initial magnetization is performed to the magnetic disk for transfer 60 which has been formed. As shown in Fig. 1A, as for the initial magnetization (direct current magnetization) of the magnetic disk for transfer 60, an initialization magnetic field Hi is generated by a magnetic field application device not shown which is capable of vertically applying the magnetic field to the magnetic disk for transfer 60. And as shown in Fig. 2A, initial magnetization Pi is performed to a magnetic layer 60M of the magnetic disk for transfer 60 in one direction. To be more precise, this is performed by generating the magnetic field of higher intensity than a coercive force Hc of the magnetic disk for transfer 60 as the initialization magnetic field Hi.

The initial magnetization may also be performed relatively rotating the magnetic disk for transfer 60 against the magnetic field application device.

### [Master Disk]

Next, a master disk as a master recording medium will be described.

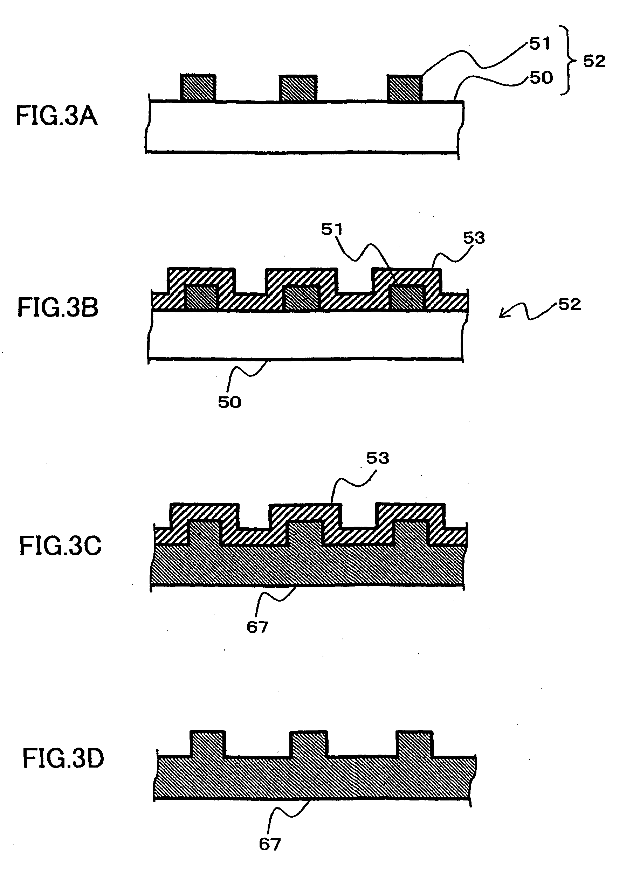

First, a manufacturing method of a master disk 66 will be described based on Figs. 3A to 3D. As this embodiment uses a press master, a manufacturing process of the press master will be described first. As shown in Fig. 3A, a photoresist is applied on a circular substrate 50 composed of smooth-surfaced glass or silica glass with a spin coater or the like. After a prebake, a laser beam (or an electron beam) modulated correspondingly to a signal to be recorded is applied to the photoresist while rotating the circular substrate 50 so as to expose approximately the entire surface of the photoresist to a predetermined pattern. After that, the exposed substrate 50 is dipped in a developer so that an exposed portion of the photoresist is eliminated so as to manufacture a glass master 52 having a photoresist layer 51 formed in a predetermined area on the exposed substrate 50.

Next, as shown in Fig. 3B, Ni plating (electroforming) is performed on the surface of a plane having the photoresist layer 51 formed on the glass master 52, and thus a Ni master 53 having a concavo-convex pattern in a positive state on its surface is formed to a predetermined thickness. After that, the Ni master 53 is separated from the glass master 52.

It is also possible to use the Ni master 53 as the press master (mold) for a stamper, where the Ni master 53 is coated with the soft magnetic layer, an overcoat and the like on its concavo-convex pattern so as to render it as the press master (mold) for the stamper. This is because magnetic properties of the magnetic disks for transfer manufactured thereafter are improved by thus forming the soft magnetic layer, overcoat and the like.

As for the materials constituting the Ni master 53, Ni and Ni alloys are mainly used. Concerning the method of forming the Ni master 53, it is also possible to manufacture the Ni master 53 by a vacuum film forming method such as sputtering and ion plating other than the plating methods by electroless plating and the like previously described. It is also possible to manufacture the Ni master 53 by performing electrolytic plating after performing the vacuum film forming. Either a positive type or a negative type is usable as to the photoresist to be applied on the circular substrate 50. However, it is necessary to note that an exposure pattern is inverted between the positive type and negative type.

Next, as shown in Fig. 3C, a resin substrate 67 is manufactured by injection molding or the like with the separated Ni master 53 as the press master. As for resin materials of the resin substrate 67, there are acrylic resins such as polycarbonate and polymethylmethacrylate, vinyl chloride resins such as polyvinyl chloride and vinyl chloride copolymer, epoxy resin, amorphous polyolefin, polyester and the like. Of these resin materials, polycarbonate is currently desirable in terms of moisture resistance, dimensional stability, cost and the like.

In the case where the resin substrate 67 is formed by the injection molding, burrs and the like may occur to the resin substrate 67 which is a molded article. Such burrs are eliminated by varnish or polishing processing.

As for the method of forming the resin substrate 67 by a method other than the injection molding, there are the methods of using a UV-curable resin, an electron beam curable resin and the like. In this case, the UV-curable resin or the electron beam curable resin is applied to the press master by a technique such as the spin coat or bar coat, then an ultraviolet or an electron beam is applied thereto to harden the resin, and then the resin is separated from the press master so as to form the resin substrate 67.

As shown in Fig. 3D, the resin substrate 67 having a projection-like pattern (concavo-convex pattern) of 30 to 150-nm height formed thereon is formed by the above process.

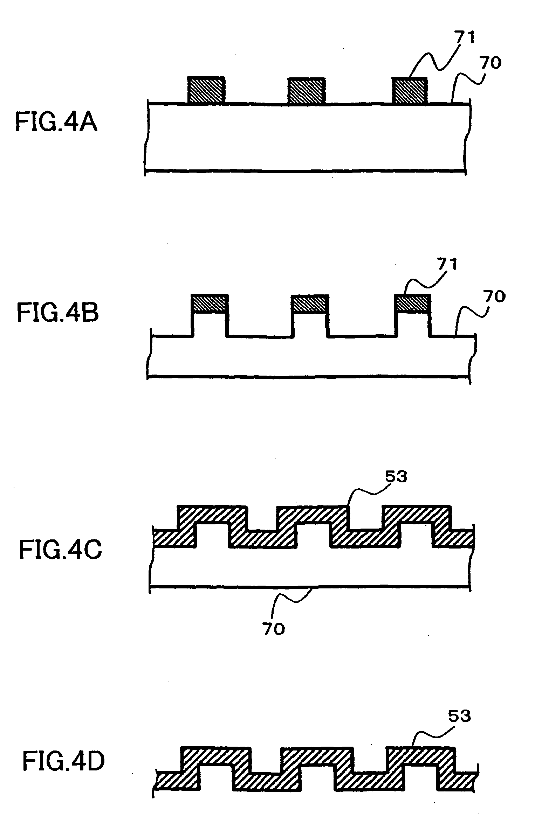

The manufacturing method of the Ni master 53 for manufacturing the resin substrate 67 may also be a method other than this. An example of the method other than the above will be described based on Figs. 4A to 4D.

The photoresist is applied on an approximately circular smooth-surfaced Si substrate 70 with the spin coater or the like. After the prebake, the laser beam (or electron beam) modulated correspondingly to the signal to be recorded is applied to the photoresist while rotating the Si substrate 70 so as to expose approximately the entire surface of the photoresist to the predetermined pattern. After that, the exposed Si substrate 70 is dipped in the developer so as to eliminate the exposed portion of the photoresist. Thus, the Si substrate 70 having a photoresist layer 71 formed in the predetermined area thereof is manufactured as shown in Fig. 4A.

Next, as shown in Fig. 4B, dry etching by RIE (Reactive Ion Etching) or the like is performed to the plane of the Si substrate 70 on which the photoresist layer 71 is formed. To be more precise, the dry etching was performed by installing the Si substrate 70 having a photoresist layer 71 formed thereon inside a pressure reducing chamber of an RIE apparatus, and then depressurizing the pressure reducing chamber of the RIE apparatus, and then introducing a chlorine (Cl₂) gas inside the pressure reducing chamber, applying RF power and generating plasma. In the case of the RIE, the Si substrate 70 is selectively etched against the photoresist layer 71. Therefore, the etching is only performed to the area of the Si substrate 70 where the photoresist layer 71 is not formed. After that, the photoresist layer 71 on the Si substrate 70 is eliminated with an organic solvent so as to manufacture the Si substrate 70 having the concavo-convex pattern formed on its surface.

After that, as shown in Fig. 4C, a conducting layer composed of a metallic material and the like is film-formed by sputtering on the plane of the Si substrate 70 on which the concavo-convex pattern is formed. And the Ni master 53 is formed by further performing the Ni electroforming.

After that, as shown in Fig. 4D, the Ni master 53 is manufactured by separating the layer from the Si substrate 70. The Ni master 53 manufactured here is the same as the Ni master 53 manufactured in Fig. 3B, and the resin substrate 67 can be manufactured by the injection molding using the same method as the method shown in Fig. 3C.

Next, as shown in Fig. 5A, the resin substrate 67 thus formed has a photoresist 69 applied on the plane of the resin substrate 67 having the projection-like pattern formed thereon by a spin coater or the like so as to harden the photoresist 69. To be more precise, in the case where the photoresist 69 is a negative resist, it is polymerized by applying an ultraviolet or the like. In the case where the photoresist 69 is a positive resist, it is polymerized by using a baking process. As the photoresist 69 is evenly expanded by the spin coater or the like, it is formed to be thin in the convex portion which is the projection-like pattern on the surface of the resin substrate 67 and to be thick in the concave portion other than that.

After that, as shown in Fig. 5B, a part of the surface of the photoresist 69 is eliminated by performing ashing introducing an oxygen gas. To be more precise, the ashing is stopped when the surface of the projection-like pattern of the resin substrate 67 is exposed. As for the ashing, the photoresist 69 is evenly eliminated in a thickness direction. Even if the surface of the convex portion of the projection-like pattern of the resin substrate 67 is exposed, however, the photoresist 69 is thickly formed in the concave portion so that the photoresist 69 in that area remains existent.

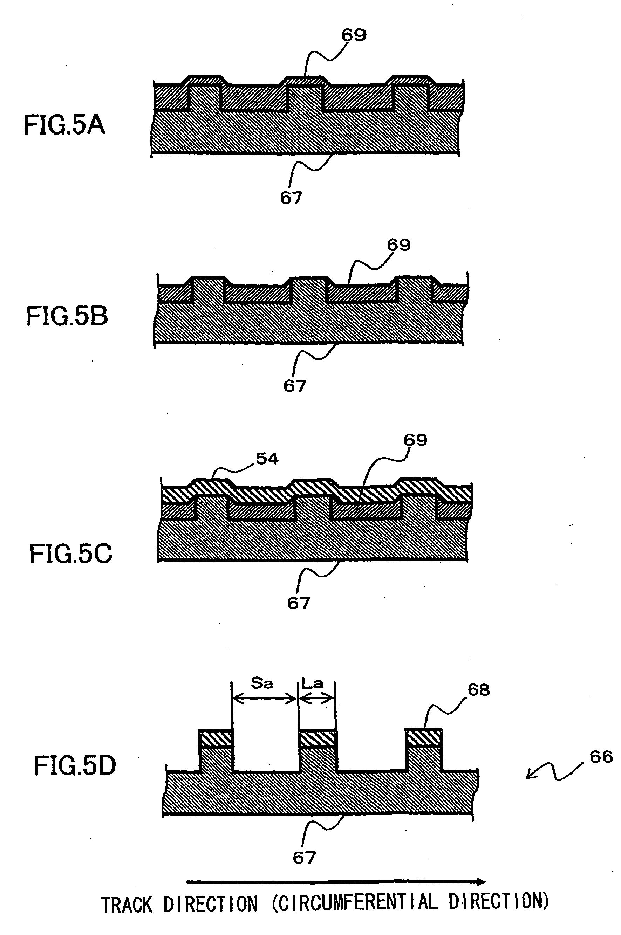

After that, as shown in Fig. 5C, a magnetic film 54 composed of a soft magnetic body is film-formed by plating or vacuum deposition on the plane on which the photoresist 69 of the resin substrate 67 is formed. The material constituting the magnetic film 54 should preferably be composed of a soft magnetic material of which coercive force Hc is 48 kA/m (≈ 600 Oe) or less. To be more precise, it can be Co, Co alloys (CoNi, CoNiZr, CoNbTaZr and the like), Fe, Fe alloys (FeCo, FeCoNi, FeNiMo, FeAlSi, FeAl and FeTaN), Ni, Ni alloy (NiFe) and the like. In particular, FeCo and FeCoNi are desirable in terms of the magnetic properties. Thickness of the magnetic film 54 should preferably be 40 nm to 320 nm or more preferably 100 nm to 300 nm. The magnetic film 54 is formed by the sputtering, electroless plating and the like by using the target of the material.

After that, the magnetic film 54 formed on the photoresist 69 is eliminated by lift-off. To be more precise, the resin substrate 67 on which the magnetic film 54 is film-formed is dipped in the organic solvent so that the magnetic film 54 formed on the photoresist 69 is eliminated together with the photoresist 69.

As shown in Fig. 5D, the master disk 66 on which the concavo-convex pattern having a magnetic layer 68 provided thereon is formed on a top surface of the convex area.

As for the concavo-convex pattern thus formed, width in a track direction (circumferential direction) of the concave area is Sa while the width in the track direction (circumferential direction) of the convex area is La. According to this embodiment, manufacturing is performed so that the width of Sa against La (Sa/La) is 1.3 to 1.9 times or preferably 1.45 to 1.75 times.

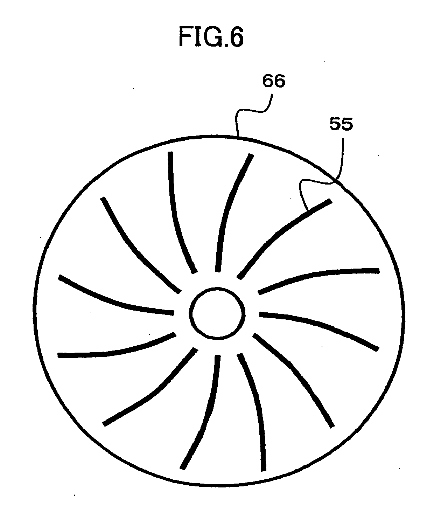

Fig. 6 is a top view of the master disk 66. As shown in Fig. 6, a servo pattern 55 composed of the concavo-convex pattern is formed on the surface of the master disk 66.

It is also feasible to provide the overcoat such as a diamond-like carbon on the magnetic layer 68 and further provide a lubricant layer on the overcoat. This is intended to prevent the master disk 66 from becoming unusable as the master disk 66 because the magnetic layer 68 is apt to be damaged when the master disk 66 is brought in intimate contact with the magnetic disk for transfer 60 as will be described later. The lubricant layer also has the effect of preventing occurrence of a blemish caused by friction on contact with the magnetic disk for transfer 60 and improving durability.

To be more precise, it is desirable to have a configuration in which the diamond-like carbon film of 5 to 30-nm thickness is formed as the overcoat, and the lubricant layer is further formed thereon. It is also feasible to form a contact enhancement layer of Si or the like on the magnetic layer 68 and form the overcoat thereafter for the sake of reinforcing adhesiveness of the magnetic layer 68 and the overcoat.

### [Intimate Contact Process]

Next, as shown in Fig. 1B, an intimate contact process brings in intimate contact by predetermined suppress strength the plane having the projection-like pattern formed thereon of the master disk 66 manufactured by the above process and the plane having the magnetic layer 60M formed thereon of the magnetic disk for transfer 60.

Before bringing the magnetic disk for transfer 60 in intimate contact with the master disk 66, the magnetic disk for transfer 60 undergoes a cleaning process (varnishing process or the like) for eliminating microspikes or adhering dust on the surface with a glide head, a polishing body and the like as required.

As shown in Fig. 1B, in the intimate contact process, there are the cases where the master disk 66 is brought in intimate contact with one side of the magnetic disk for transfer 60 and the cases where the master disk 66 is brought in intimate contact with both sides of the magnetic disk for transfer 60 having the magnetic layers formed on both sides thereof. In the latter cases, there is an advantage that both sides can be simultaneously transferred.

### [Magnetic Transfer Process]

Next, a magnetic transfer process will be described based on Fig. 1C.

As for the magnetic disk for transfer 60 and the master disk 66 brought in intimate contact, a magnetic field for recording Hd is generated by the magnetic field application device not shown in an opposite direction to the direction of the initialization magnetic field Hi. The magnetic transfer is performed as a magnetic flux generated by generating the magnetic field for recording Hd proceeds into the magnetic disk for transfer 60 and the master disk 66.

According to this embodiment, the magnitude of the magnetic field for recording Hd is approximately the same value as Hc of the magnetic material constituting the magnetic layer 60M of the magnetic disk for transfer 60.

As for the magnetic transfer, the magnetic field for recording Hd is applied by the magnetic field application device while rotating the magnetic disk for transfer 60 and the master disk 66 brought in intimate contact with a rotation device not shown so as to magnetically transfer the information defined by the projection-like pattern recorded on the master disk 66 to the magnetic layer 60M of the magnetic disk for transfer 60. It is also possible, other than this configuration, to use a technique wherein a mechanism for rotating the magnetic field application device is provided so as to relatively rotate the magnetic field application device against the magnetic disk for transfer 60 and the master disk 66.

Fig. 2B shows an appearance of cross sections of the magnetic disk for transfer 60 and the master disk 66 in the magnetic transfer process.

As shown in Fig. 2B, in the state in which the master disk 66 having the projection-like pattern formed on the surface of the resin substrate 67 and the magnetic layer 68 formed thereon is in intimate contact with the magnetic disk for transfer 60, the magnetic layer 68 of the master disk 66 is in contact with the magnetic layer 60M of the magnetic disk for transfer 60 in the convex area of the master disk 66.

For this reason, if the magnetic field for recording Hd is applied, a magnetic flux G is strong in the convex area of the master disk 66, that is, in the area where the magnetic layer 68 of the master disk 66 is in contact with the magnetic layer 60M of the magnetic disk for transfer 60. In that area, due to the magnetic field for recording Hd, a magnetization direction of the magnetic layer 68 of the master disk 66 is arranged in the direction of the magnetic field for recording Hd and magnetism information is transferred to the magnetic layer 60M of the magnetic disk for transfer 60.. In the concave area of the master disk 66, that is, in the area where the magnetic layer 68 of the master disk 66 is not formed, the magnetic layer 68 of the master disk 66 does not exist so that the magnetic flux G generated by applying the magnetic field for recording Hd is weak and the magnetic layer 60M of the magnetic disk for transfer 60 retains the state of the initial magnetization as-is without changing its magnetization direction.

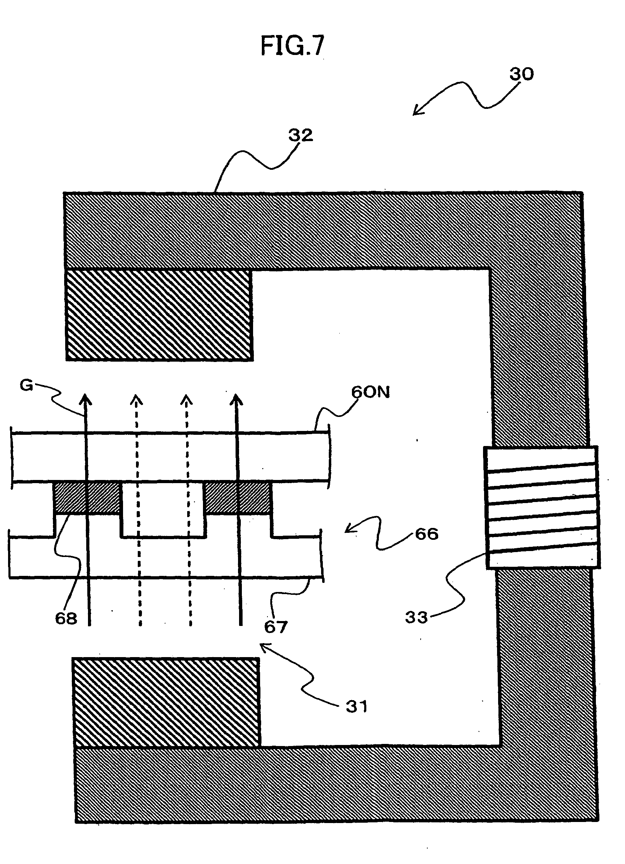

Fig. 7 shows a magnetic transfer apparatus used for the magnetic transfer in detail. The magnetic transfer apparatus includes a magnetic field application device 30 composed of an electromagnet having a coil 33 wound around a core 32. The magnetic transfer apparatus has the configuration in which a current is passed through the coil 33 so as to vertically generate the magnetic field to the master disk 66 and the magnetic layer 60M of the magnetic disk for transfer 60 brought in intimate contact in a gap 31. The direction of the generated magnetic field can be changed according to the direction of the current passed through the coil 33. Therefore, it is possible to perform either the initial magnetization or the magnetic transfer with the magnetic transfer apparatus. In the case of performing the magnetic transfer after performing the initial magnetization with the magnetic transfer apparatus, the current is passed through the coil 33 of the magnetic field application device, which is in the reverse direction to the current passed through the coil 33 on the initial magnetization. It is thereby possible to generate the magnetic field for recording in the opposite direction to the magnetization direction on the initial magnetization. As for the magnetic transfer, the magnetic field for recording is applied by the magnetic field application device 30 while rotating the magnetic disk for transfer 60 and the master disk 66 brought in intimate contact so as to magnetically transfer the information defined by the projection-like pattern recorded on the master disk 66 to the magnetic layer 60M of the magnetic disk for transfer 60. Therefore, the rotation device not shown is provided. It is also possible, other than this configuration, to use the technique wherein the mechanism for rotating the magnetic field application device 30 is provided so as to relatively rotate the magnetic field application device 30 against the magnetic disk for transfer 60 and the master disk 66.

According to this embodiment, the magnetic field for recording Hd performs the magnetic transfer by applying the magnetic field of 75 to 105 (%) or preferably 85 to 95 (%) intensity of the coercive force Hc of the magnetic layer 60M of the magnetic disk for transfer 60 which is used for this embodiment.

After that, the magnetic disk for transfer 60 is taken off the master disk 66. Thus, as shown in Fig. 2C, the magnetic layer 60M of the magnetic disk for transfer 60 has the information on a magnetic pattern such as a servo signal recorded therein as recording magnetization Pd which is the magnetization in the opposite direction to the initial magnetization Pi. As the magnetic layer 60M of the magnetic disk for transfer 60 is the perpendicular magnetization film, a magnetic wall D is formed on a boundary between the initial magnetization Pi and the recording magnetization Pd.

The projection-like pattern formed on the resin substrate 67 of the master disk 66 may also be a negative pattern which is opposite to the positive pattern shown in Fig. 5D. This is because, in this case, the same magnetic pattern can be magnetically transferred to the magnetic layer 60M of the magnetic disk for transfer 60 by reversing the direction of the initialization magnetic field Hi and the direction of the magnetic field for recording Hd respectively.

This embodiment has described the magnetic field application device in the case of the electromagnet. However, a permanent magnet which similarly generates the magnetic field may also be used.

### [Evaluation]

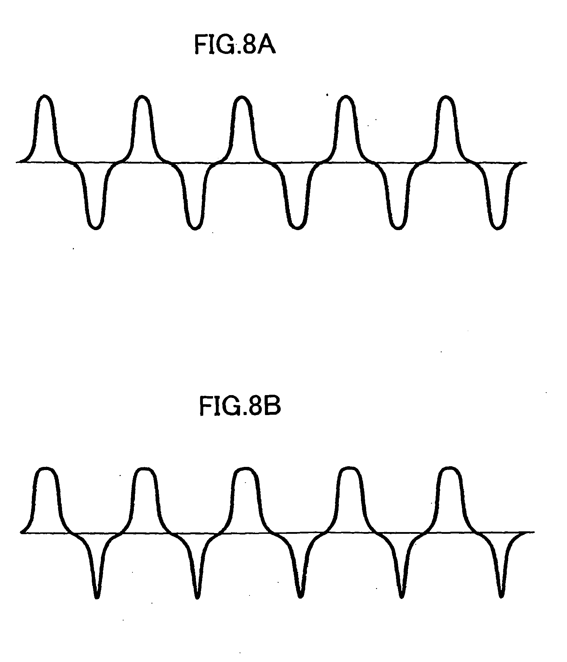

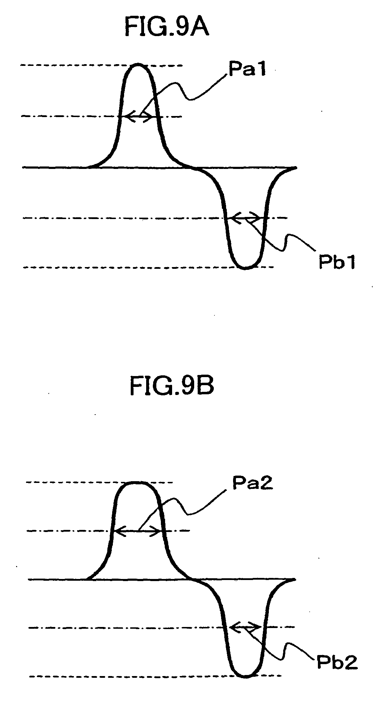

A description will be given as to a regenerative signal recorded on the magnetic recording medium having performed the magnetic transfer as above. Figs. 8A and 8B show regenerative waveforms on reproducing the magnetism information which is recorded on the magnetic recording medium 60 having performed the magnetic transfer. Fig. 8A is the case where a signal waveform on reproducing the magnetic pattern which is the magnetism information recorded on the magnetic recording medium 60 is almost vertically symmetrical. Fig. 9A shows a further expanded waveform. As for such regenerative signal waveforms, a half bandwidth of the signal waveform in a positive portion of the regenerative signal (width of the waveform at a center value between a positive peak of the regenerative signal and 0) Pal and a half bandwidth of the signal waveform in a negative portion of the regenerative signal (width of the waveform at a center value between a negative peak of the regenerative signal and 0) Pb 1 are approximately the same. In this case, even harmonic components represented by the second-order harmonic components are kept low.

In comparison, Fig. 8B is the case where the signal waveform on reproducing the magnetic pattern which is the magnetism information recorded on the magnetic recording medium 60 is vertically asymmetrical. Fig. 9B shows a further expanded waveform. As for such regenerative signal waveforms, a half bandwidth of the signal waveform in a positive portion of the regenerative signal (width of the waveform at a center value between a positive peak of the regenerative signal and 0) Pa2 becomes wider than a half bandwidth of the signal waveform in a negative portion of the regenerative signal (width of the waveform at a center value between a negative peak of the regenerative signal and 0) Pb2. In this case, the even harmonic components represented by the second-order harmonic components become larger. If the even harmonic components such as the second-order harmonic components become higher like that, there is a tendency that such components exert a harmful influence over the recorded regenerative signal. To be more precise, in the case where a magnetically transferred signal is the servo signal, servo accuracy lowers, and it becomes difficult to take a servo. For this reason, as shown in Figs. 8A and 9A, it is desirable that the waveform of the regenerative signal is a symmetrical waveform of the positive and negative as much as possible.

**[Table 1]**

| Pulse width | Second-order harmonic intensity | Servo accuracy | Evaluation |
|---|---|---|---|
| 0.92 | 1.89 | 19.61 | Problematic |
| 0.96 | 1.45 | 16.94 | Good |
| 1 | 1 | 15.3 5 | Excellent |
| 1.08 | 2.29 | 18.31 | Problematic |
| 1.1 | 2.93 | 20.66 | Worst |
| 1.15 | 3.79 | 29.6 | Worst |

Table 1 shows the pulse width of the reproduced waveform, the second-order harmonic intensity of the reproduced waveform, servo accuracy and an evaluation result thereof. Here, the pulse width is based on each of the positive and negative half bandwidths of the reproduced waveform. When the pulse width is 1, the positive and negative half bandwidths of the reproduced waveform become the same. In reference to this value, a ratio of the half bandwidths in a positive area of the reproduced waveform is shown. The second-order harmonic intensity indicates a value of relative intensity of the second-order harmonic in reference to the value of 1 on condition that the intensity of the second-order harmonic is 1 in the case where the positive and negative half bandwidths of the reproduced waveform are the same, that is, in the case where the positive and negative of the reproduced waveform are approximately symmetrical. The servo accuracy becomes higher as its value becomes lower. How the servo is working is evaluated in reference to this value. Based on the evaluation results of the servo, the servo accuracy becomes highest in the case where the positive and negative of the reproduced waveform are symmetrical so that the pulse width becomes 1. In this case, the second-order harmonic is lowest. As the pulse width decreases or increases, symmetry of the positive and negative in the waveform of the regenerative signal collapses and the servo accuracy deteriorates. There is a tendency that the value of the second-order harmonic similarly increases in this case. An ordinary Fourier transform can lead to such a correlation between the collapse of the symmetry of the positive and negative in the waveform of the regenerative signal and increase in the even harmonic components represented by the second-order harmonic components.

As for the evaluation results of Table 1, the case of the evaluation "Excellent" is the best case, where it is thinkable that the second-order harmonic intensity in this case is 1 to 1.3, and a pulse width P meeting this condition is a value within the range of 0.97 ≤ P ≤ 1.03. The case of the evaluation "Good" is a good case, where it is thinkable that the second-order harmonic intensity in this case is 1.3 to less than 1.6, and the pulse width P meeting this condition is a value within the range of 0.93 ≤ P < 0.97 or 1.03 < P ≤ 1.07. In the case of the evaluation "Problematic", it is thinkable that the servo is partially problematic, the second-order harmonic intensity in this case is 1.6 to less than 1.9, and the pulse width P in this case is a value within the range of 0.90 ≤ P < 0.93 or 1.07<P≤1.10. The case of the evaluation "Worst" is a case of no servo in effect, where it is thinkable that the second-order harmonic intensity in this case is 1.9 or more, and the pulse width P in this case is a value within the range of P < 0.90 or 1.10 < P.

In view of this, it is desirable to enhance the symmetry of the positive and negative of the reproduced waveforms as much as possible in order to stabilize the servo as much as possible. To be more specific, the servo accuracy can be enhanced by suppressing the second-order harmonic components as much as possible.

Measurement of the magnetically transferred regenerative signal was performed by an electromagnetic conversion characteristic measuring apparatus (LS-90 of Kyodo Denshi). In this case, an MR (Magneto-Resistive) head was used as a magnetic head. The MR head has a reproducing head gap of 0.06 µm, a reproducing track width of 0.14 µm, a recording head gap of 0.4 µm, and a recording track width of 2.4 µm. The read signal was frequency-resolved by a spectroanalyzer so as to measure peak intensity of a primary signal and the peak intensity of the second-order harmonic.

As a result of this, in this embodiment, the positive and negative waveform half bandwidths of the reproduced waveform became approximately the same so that the servo could be sufficiently operated.

### [Second Embodiment]

According to this embodiment, the master disk 66 having the concavo-convex pattern formed thereon is manufactured so that the width Sa in the track direction (circumferential direction) of the concave area is 1.5 to 2.1 times or preferably 1.6 to 1.9 times the width La in the track direction (circumferential direction) of the convex area. The manufacturing method of the master disk 66 is the same as that of the first embodiment.

The magnetic transfer is performed by using the master disk 66. As for the intensity of the magnetic field for recording Hd which is applied to a magnetic field application apparatus on performing the magnetic transfer, the magnetic transfer is performed by applying 85 to 115% or preferably 95 to 105% intensity of the coercive force Hc of the magnetic material constituting the magnetic layer 60M of the magnetic disk for transfer 60 used for the magnetic transfer.

As for the waveform of the regenerative signal of the magnetic disk for transfer 60 with which the magnetic transfer has been performed, the positive and negative waveform half bandwidths are approximately the same so that the servo could be sufficiently operated.

### [Third Embodiment]

According to this embodiment, the master disk 66 having the concavo-convex pattern formed thereon is manufactured so that the width Sa in the track direction (circumferential direction) of the concave area is 1.7 to 2.3 times or preferably 1.85 to 2.15 times the width La in the track direction (circumferential direction) of the convex area. The manufacturing method of the master disk 66 is the same as that of the first embodiment.

The magnetic transfer is performed by using the master disk 66. As for the intensity of the magnetic field for recording Hd which is applied to the magnetic field application apparatus on performing the magnetic transfer, the magnetic transfer is performed by applying 95 to 125% or preferably 105 to 115% intensity of the coercive force Hc of the magnetic material constituting the magnetic layer 60M of the magnetic disk for transfer 60 used for the magnetic transfer. As for the waveform of the regenerative signal of the magnetic disk for transfer 60 with which the magnetic transfer has been performed, the positive and negative waveform half bandwidths are approximately the same so that the servo could be sufficiently operated.

### [Relation between the Master Disk and the Magnetic Field for Recording]

A description will be given based on the first to third embodiments as to the relation between the ratio of the concavo-convex pattern of the master disk 66 and the intensity of the magnetic field for recording Hd used on the magnetic transfer.

Fig. 10 shows the relation between the ratio (Sa/La) of the width Sa in the track direction (circumferential direction) of the concave area to the width La in the track direction (circumferential direction) of the convex area and the intensity of the magnetic field for recording on the master disk 66 having the concavo-convex pattern formed thereon. An optimal area is the area where the positive and negative half bandwidths are approximately the same in the waveform of the regenerative signal of the magnetic disk for transfer 60 having performed the magnetic transfer so that this is an area having no problem in terms of the servo. A permissible area indicates the area where the values of the half bandwidths are slightly different but there is no problem in terms of the servo. The servo can be used without a problem within the range of the permissible area.

The magnetic disk for transfer 60 manufactured according to the first to third embodiments is used after being built into a magnetic recording apparatus such as a hard disk. Thus, it is possible to obtain a magnetic recording and reproducing apparatus of high servo accuracy and good recording and reproduction characteristics.

The magnetic transfer method, magnetic recording medium and the like of the present invention were described in detail above. However, the present invention is not limited to the above examples but various improvements and variations may be made without departing from the scope of the invention.

## Claims

1. A master recording medium (66) having a concavo-convex pattern formed on its surface for transferring information to a disk-like magnetic recording medium (60) and a magnetic layer (68) formed at least on the surface of a convex area of the concavo-convex pattern, the master recording medium (66) used to transfer the information recorded in the concavo-convex pattern to the magnetic recording medium (60) by bringing the area having the concavo-convex pattern formed therein in intimate contact with the magnetic recording medium (60) and applying a magnetic field of 75 to 105 (%) intensity of a coercive force of a magnetic layer (60M) constituting the magnetic recording medium (60) vertically to the magnetic recording medium,
**characterized in that** width of a concave area is 1.3 to 1.9 times the width of the convex area in a track direction of the concavo-convex pattern.

2. A master recording medium (66) having a concavo-convex pattern formed on its surface for transferring information to a disk-like magnetic recording medium (60) and a magnetic layer (68) formed at least on the surface of a convex area of the concavo-convex pattern, the master recording medium (66) used to transfer the information recorded in the concavo-convex pattern to the magnetic recording medium (60) by bringing the area having the concavo-convex pattern formed therein in intimate contact with the magnetic recording medium (60) and applying a magnetic field of 85 to 115 (%) intensity of a coercive force of a magnetic layer (60M) constituting the magnetic recording medium (60) vertically to the magnetic recording medium,
**characterized in that** width of a concave area is 1.5 to 2.1 times the width of the convex area in a track direction of the concavo-convex pattern.

3. A master recording medium (66) having a concavo-convex pattern formed on its surface for transferring information to a disk-like magnetic recording medium (60) and a magnetic layer (68) formed at least on the surface of a convex area of the concavo-convex pattern, the master recording medium (66) used to transfer the information recorded in the concavo-convex pattern to the magnetic recording medium (60) by bringing the area having the concavo-convex pattern formed therein in intimate contact with the magnetic recording medium (60) and applying a magnetic field of 95 to 125 (%) intensity of a coercive force of a magnetic layer (60M) constituting the magnetic recording medium (60) vertically to the magnetic recording medium,
**characterized in that** width of a concave area is 1.7 to 2.3 times the width of the convex area in a track direction of the concavo-convex pattern.

4. The master recording medium (66) according to claim 1 to 3, wherein the information recorded in the concavo-convex pattern is servo information.

5. A magnetic transfer method comprising:
an intimate contact step of bringing a master recording medium (66) in intimate contact with a disk-like magnetic recording medium (60), the master recording medium (66) having a concavo-convex pattern formed on its surface for transferring information to the magnetic recording medium (60) and a magnetic layer (68) formed at least on the surface of a convex area of the concavo-convex pattern; and
a magnetic transfer step of vertically applying a magnetic field to the master recording medium (66) and the magnetic recording medium (60) brought in intimate contact by the intimate contact step and thereby transferring the information of the master recording (66) medium to the magnetic recording medium (60),
**characterized in that** width of a concave area is 1.3 to 1.9 times the width of the convex area in a track direction of the concavo-convex pattern of the master recording medium (66); and
intensity of the magnetic field applied in the magnetic transfer step is 75 to 105 (%) of a coercive force of a material constituting a magnetic layer (60M) of the magnetic recording medium (60).

6. A magnetic transfer method comprising:
an intimate contact step of bringing a master recording medium (66) in intimate contact with a disk-like magnetic recording medium (60), the master recording medium (66) having a concavo-convex pattern formed on its surface for transferring information to the magnetic recording medium (60) and a magnetic layer (68) formed at least on the surface of a convex area of the concavo-convex pattern; and
a magnetic transfer step of vertically applying a magnetic field to the master recording medium (66) and the magnetic recording medium (60) brought in intimate contact by the intimate contact step and thereby transferring the information of the master recording medium (66) to the magnetic recording medium (60),
**characterized in that** width of a concave area is 1.5 to 2.1 times the width of the convex area in a track direction of the concavo-convex pattern of the master recording medium (66); and
intensity of the magnetic field applied in the magnetic transfer step is 85 to 115 (%) of a coercive force of a material constituting a magnetic layer (60M) of the magnetic recording medium (60).

7. A magnetic transfer method comprising:
an intimate contact step of bringing a master recording medium (66) in intimate contact with a disk-like magnetic recording medium (60), the master recording medium (66) having a concavo-convex pattern formed on its surface for transferring information to the magnetic recording medium (60) and a magnetic layer (68) formed at least on the surface of a convex area of the concavo-convex pattern; and
a magnetic transfer step of vertically applying a magnetic field to the master recording medium (66) and the magnetic recording medium (60) brought in intimate contact by the intimate contact step and thereby transferring the information of the master recording medium (66) to the magnetic recording medium (60),
**characterized in that** width of a concave area is 1.7 to 2.3 times the width of the convex area in a track direction of the concavo-convex pattern of the master recording medium (66); and
intensity of the magnetic field applied in the magnetic transfer step is 95 to 125 (%) of a coercive force of a material constituting a magnetic layer (60M) of the magnetic recording medium (60).

8. The magnetic transfer method according to claim 5 to 7, wherein the information transferred from the master recording medium (66) to the magnetic recording medium (60) is servo information.

9. A magnetic transfer apparatus for transferring information of a master recording medium (66) to a disk-like magnetic recording medium (60), comprising:
the master recording medium (66) having a concavo-convex pattern formed on its surface for transferring information to the magnetic recording medium (60) and a magnetic layer (68) formed at least on the surface of a convex area of the concavo-convex pattern; and
a magnetic field application device (30) for bringing the master recording medium (66) in intimate contact with the magnetic recording medium (60), and vertically applying a magnetic field to the master recording medium and the magnetic recording medium brought in intimate contact,
**characterized in that** width of a concave area is 1.3 to 1.9 times the width of the convex area in a track direction of the concavo-convex pattern of the master recording medium (66); and
intensity of the magnetic field applied by the magnetic field application device (30) is 75 to 105 (%) of a coercive force of a material constituting a magnetic layer (60M) of the magnetic recording medium (60).

10. A magnetic transfer apparatus for transferring information of a master recording medium (66) to a disk-like magnetic recording medium (60), comprising:
the master recording medium (66) having a concavo-convex pattern formed on its surface for transferring information to the magnetic recording medium (60) and a magnetic layer (68) formed at least on the surface of a convex area of the concavo-convex pattern; and
a magnetic field application device (30) for bringing the master recording medium (66) in intimate contact with the magnetic recording medium (60), and vertically applying a magnetic field to the master recording medium and the magnetic recording medium brought in intimate contact,
**characterized in that** width of a concave area is 1.5 to 2.1 times the width of the convex area in a track direction of the concavo-convex pattern of the master recording medium (66); and
intensity of the magnetic field applied by the magnetic field application device (30) is 85 to 115 (%) of a coercive force of a material constituting a magnetic layer (60M) of the magnetic recording medium (60).

11. A magnetic transfer apparatus for transferring information of a master recording medium (66) to a disk-like magnetic recording medium (60), comprising:
the master recording medium (66) having a concavo-convex pattern formed on its surface for transferring information to the magnetic recording medium (60) and a magnetic layer (68) formed at least on the surface of a convex area of the concavo-convex pattern;
a magnetic field application device (30) for bringing the master recording medium (66) in intimate contact with the magnetic recording medium (60), and vertically applying a magnetic field to the master recording medium and the magnetic recording medium brought in intimate contact,
**characterized in that** width of a concave area is 1.7 to 2.3 times the width of the convex area in a track direction of the concavo-convex pattern of the master recording medium (66); and
intensity of the magnetic field applied by the magnetic field application device (30) is 95 to 125 (%) of a coercive force of a material constituting a magnetic layer (60M) of the magnetic recording medium (60).

12. The magnetic transfer apparatus according to claim 9 to 11, wherein the information transferred from the master recording medium (66) to the magnetic recording medium (60) is servo information.

13. A magnetic recording medium (60) wherein information has been magnetically transferred thereto by the magnetic transfer method according to claim 5 to 8.

14. A magnetic recording and reproducing apparatus wherein the magnetic recording medium (60) according to claim 13 is provided.
